# EUROPEAN PATENT SPECIFICATION

(11) **EP 3 926 648 B1**
(45) Date of publication and mention of the grant of the patent: **12.07.2023**
(21) Application number: 20382513.8
(22) Date of filing: 15.06.2020
(51) Int. Cl.: H01F 3/10, H01F 27/38, H01F 30/14, H01F 3/14, H01F 41/02, H02M 3/00, H02M 1/40

(54) **CORE STRUCTURE FOR MAGNETIC COMPONENTS AND CONVERTER THEREWITH**
KERNSTRUKTUR FÜR MAGNETISCHE KOMPONENTEN UND WANDLER DAMIT
STRUCTURE DE NOYAU POUR COMPOSANTS MAGNÉTIQUES ET CONVERTISSEUR ASSOCIÉ

(43) Date of publication of application: 22.12.2021
(73) Proprietor: SP Control Technologies, S.L., 28003 Madrid (ES)
(72) Inventor: NICIEZA, Lucas, 28003 Madrid (ES); LUNA, Marcos, 28003 Madrid (ES); MOLINA, Jose Maria, 28003 Madrid (ES)
(74) Representative: Fernandez Pou, Felipe

(56) References cited:
- EP-A1- 3 133 614
- EP-A1- 3 349 224
- EP-A1- 3 401 935
- CN-U- 210 039 873

## Description

### Technical Field

The present invention relates to power conversion, and more particularly, to the integration of a plurality of magnetic components for inductor-based switched-mode power supplies.

### Background Art

Inductor-based switched-mode power supplies (in the following simply "converter") find nowadays application in a broad variety of fields and power levels, e.g. from low-power DC-DC converters in a smartphone to high-power DC-AC converters (also known as inverters) in grid-tied photovoltaic power plants. As it is well known in the art, they may comprise at least one controllable switch (e.g. a MOSFET or IGBT) one inductor, one output capacitor and one controller. The controllable switch comprises one control terminal and two power terminals; the signals applied to the control terminal determine the level of current conduction allowed between the first and the second power terminals, although in converters they are usually considered fully on or fully off, interpreted as an ideal short-circuit -0 Ohm- or an ideal open-circuit -∞ Ohm-, respectively. The controller is configured to command the at least one controllable switch on and off at a switching frequency -often constant-, thereby controlling the ramp up and down of a current across the inductor. The output capacitor is responsible for providing a clean output voltage, filtering the harmonic components at and above the switching frequency. A number of topologies are well known in the art: buck or step-down converter, boost or step-up converter, inverting buck-boost converter, non-inverting buck-boost converter (cascaded step-down and step-up converters), forward converter, half-bridge converter and full-bridge converter. All of them are meant for DC-DC conversion and some of them, additionally for DC-AC conversion, like the half-bridge or the full-bridge converter. In turn, the flyback converter lacks a dedicated inductor as such but, in turn, the controller commands the switch on and off to control the ramp up and down of a current across the flyback transformer windings; reference is actually sometimes made to the flyback transformer as two coupled inductors. Other topologies are also well known, like the Cuk or the SEPIC converters. The list referred herein is not exhaustive.

Transformers and inductors are referred to as magnetic components. They usually consist of a solid core and one or several windings disposed around it. The solid core is made out of ferromagnetic material; the choice of material depends on the switching frequency of the converter, being iron powder, ferrites and iron some of the possible example materials. Each of the one or more windings in a magnetic component comprises a cable wound around a part of the core. The cable comprises an internal wire made of an electrical conductive material, like copper, covered by an electrical isolating layer.

Some of the above mentioned topologies comprise only a single magnetic component, like the buck or boost converters. In some others, at least two magnetic components are present. This is the case of the forward, half-bridge or full-bridge converters, where, besides the inductor, a transformer must or can be added, therefore comprising two magnetic components. Other topologies, like the phase-shift full-bridge converter increase the count to three magnetic components, comprising a series input inductor, a transformer and an output inductor.

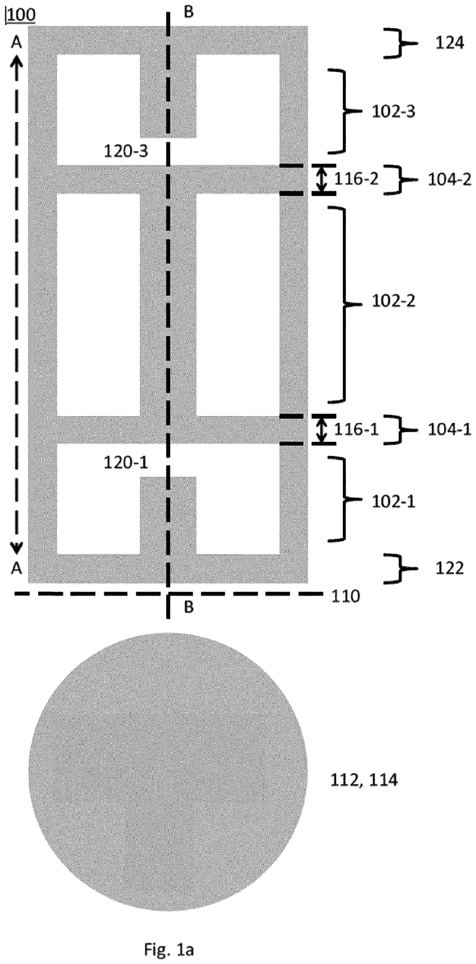

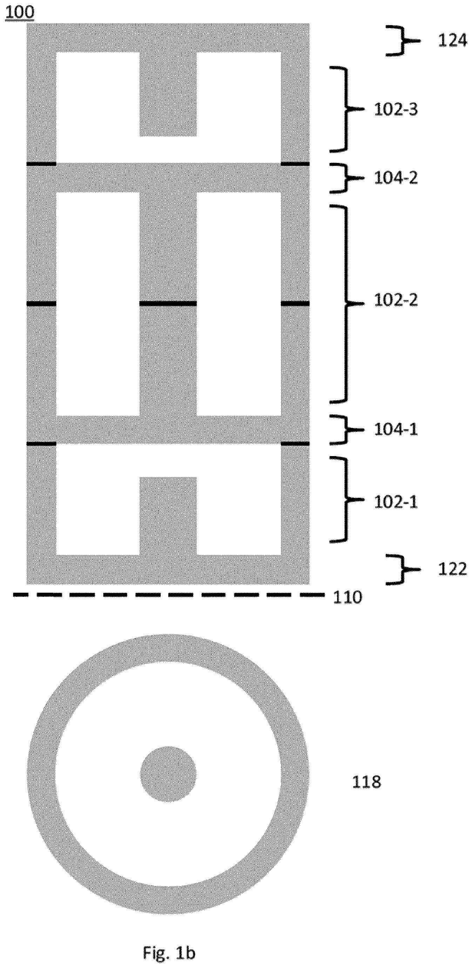

Whenever the topology of a converter comprises two or more magnetic components, the integration of the magnetic components can be considered. Integration refers herein to the construction on a continuous piece of core material of a plurality of magnetic components (i.e. inductors and transformers). The integration can be advantageous in terms of size and cost reduction, and it is, therefore, often recommendable. The continuous piece of magnetic core can be either a one-piece core (Fig. 1a) or can be created by stacking successive pieces of individual cores (Fig. 1b) joined together with clips or any other suitable attaching means (not shown).

Be with a one-piece core (Fig. 1a) or with successively stacked cores (Fig. 1b), the resulting core structure 100 for integration of the magnetic components usually presents, in a particular direction A/A, a succession of portions which alternate windowed portions 102-1, 102-2... 102-n and perpendicular portions 104-1, 104-2... 104-m, with m=n-1. The term windowed as used herein is derived from the well-known term window which, in the field of magnetic cores, stands for the hollow spaces where the windings are to be wound. In each of the windowed portions, the winding(s) of a respective one of the plurality of magnetic components to be integrated is(are) arranged. Therefore, the direction A/A refers, not only to the direction in which the windowed portions 102 and the perpendicular portions 104 are alternately disposed, but also to the direction in which the magnetic components to be integrated are disposed. Between two successive windowed portions 102-i and 102-i+1, a perpendicular portion 104-i is arranged, as already mentioned. Each perpendicular portion 104-i is configured to allow the return of the magnetic flux lines for each of the two magnetic components arranged in the windowed portions 102-i and 102-i+1 at both sides -in the direction A/A of the succession- of the respective perpendicular portion 104-i, thereby minimizing the coupling with the other magnetic components integrated in the same core structure 100. Otherwise, i.e. in the absence of perpendicular portions 104, all the portions of the structure 100 would conduct flux of each of the magnetic components. In the direction A/A, the core structure 100 is finalized with the presence of a bottom portion 122 and a top portion 124.

The projection of the core structure 100 on any plane 110 which fulfills the conditions of being perpendicular to the direction A/A defined by the succession of portions and which is external to the structure 100 (i.e. which does not intersect the core structure 100) defines a structure projection area 112. One distinguishing characteristic of each of the perpendicular portions 104 is that the projection of any of them on the plane 110 results in an area 114 which coincides with the structure projection area 112, in case the perpendicular portions 104 were isolated from the structure. To define completely each of the perpendicular portions 104, a thickness 116-1, 116-2... 116-m for each of those perpendicular portions 104-1, 104-2... 104-m must be defined. Conversely, if isolated, the projection of any of the windowed portions on the plane 110 results in an area 118 -shown only in Fig. 1b- which does not coincide with the structure projection area 112, since it is empty in some zones due to the presence of windows. The top portion 122 and the bottom portion 124 are similar to the perpendicular portions 104-1, 104-2... 104-n and, therefore, projection of any of them on the first plane 110 results as well in the area 114 which coincides with the structure projection area 112.

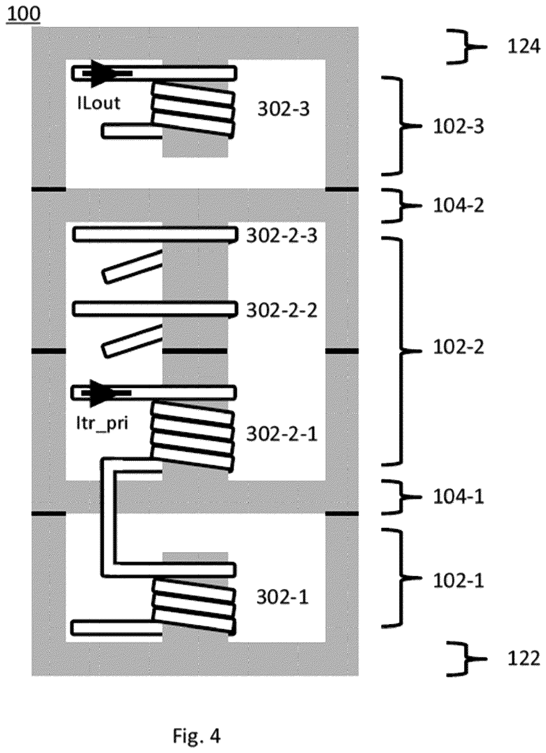

As already mentioned, the integrated structure 100 can be built by joining together successive pieces of individual cores in a stack, as shown in Fig. 1b. This is the most usual way and it is well known in the art. In the example shown in Fig. 1b, four individual cores are stacked for creating a core structure 100 comprising three windowed portions 102-1 to 102-3 meant to receive the windings of three different magnetic components to be integrated, as will be explained later with reference to Fig. 4.

In Figs. 1a-1b, as shown by the areas 112, 114 and 118, the integrated core structure 100 presents total symmetry around an axis B/B (shown only in Fig. 1a) parallel to the direction A/A, i.e. their components can be defined by or decomposed in cylinders. This is just an example and, of course, alternative constructions can be used, which can present no symmetry at all or alternative symmetry relationships, like symmetry around a plane parallel to the direction A/A and perpendicular to the paper, as is the case of known E cores. Other structures present mixed symmetries, e.g. where the central leg is a cylinder and the lateral legs are substantially parallelepiped with or without rounded inner sides, known as ETD, EQ and ER cores, or complex symmetries even more difficult to describe, like the known PM and PQ cores. Both the problems as will be identified in this section and the solutions as will be explained further below -i.e. the teachings of the present invention-, apply to any of the above mentioned cores and to many others. Additionally, in the integrated structure 100 shown in Figs. 1a-1b, the three windowed portions 102-1 to 102-3 comprise a central leg and two of them (central legs of windowed portions 102-1 and 102-3) comprise a central leg with air-gaps 120 (in particular 120-1 and 120-3), which is usual for those windowed portions conceived for receiving the windings of inductors or coupled inductors (e.g. flyback transformers). A further element of the windowed portions complete the description thereof: the peripheral wall(s). Herein the term peripheral wall is used for the sub-portion of the windowed portion which is not the central leg (if any) but is parallel thereto to conduct magnetic flux also in a direction parallel to direction A/A. As it is well known in the art, the mentioned air gaps can also be arranged in the peripheral walls or not present at all (either because air gap is not needed or because distributed air gaps are employed).

Despite the potential advantages offered thereby, engineers must design the integration of magnetic components carefully. In the context of magnetic components, the risk of magnetic saturation of the core must be avoided. Saturation occurs when the density of magnetic flux exceeds the limits of the core material and can lead to loss of its magnetic properties. This, in turn, can lead to an uncontrolled behavior of the converter which can damage the input source, the output load and/ or the converter itself. The term "density" in the magnitude "density of magnetic flux" stands for the ratio of units of magnetic flux divided by units of area; therefore, in order to avoid that the flux density limit is exceeded in a portion or sub-portion of the core, not only a different material can be selected, but also the cross-section of that portion can be modified (i.e. increased).

Within a given topology, some magnetic components can be placed in series, like an inductor and the primary winding of a transformer in some resonant converters. Because of that series connection -or because of other reasons, like waveforms forced by a particular topology and a particular switching pattern- some magnetic components in the converter might always carry currents which are subject to the same frequency and with transitions which are synchronized in phase. For those components, the integration of magnetic components can be easier, since the flux lines across the core portions of those two magnetic components can potentially tend to cancel each other at all times. As a consequence, if they are disposed in successive windowed portions and wound in opposite directions -right hand rule applied to the direction of winding for determining the direction of the resulting magnetic field or flux-, the thickness of the perpendicular portion interfacing therebetween can be reduced without risk of magnetic saturation.

Nevertheless, the opposite case might as well occur. In some converters, due to the topology and the switching pattern, some magnetic components might have to carry currents whose transitions are not synchronized and/or whose frequencies are different (e.g. a natural multiple, like double). If this is the case, integration of those components in successive windowed portions will lead to sub-stages where the perpendicular portion interfacing therebetween is not subject to a flux cancellation but, in turn, to a disadvantageous flux addition.

To illustrate the problem, the topology of the well-known phase-shift full-bridge DC-DC converter is selected. It is one of the most common topologies used in the industry. Normally, it comprises three magnetic components:
- Series inductor, which is responsible for storing enough energy to charge and discharge the output capacitances of the semiconductors with soft switching.
- Transformer, which provides galvanic isolation between the DC input and output voltage as well as the possibility of further stepping up or down the voltage thanks to its transformation ratio. The current flowing through its windings has the same frequency and transitions synchronized with the current flowing through the series inductor.
- Output inductor, which is responsible for filtering the output current. The current flowing therethrough is twice the frequency of the current through the series inductor and through the windings of the transformer.

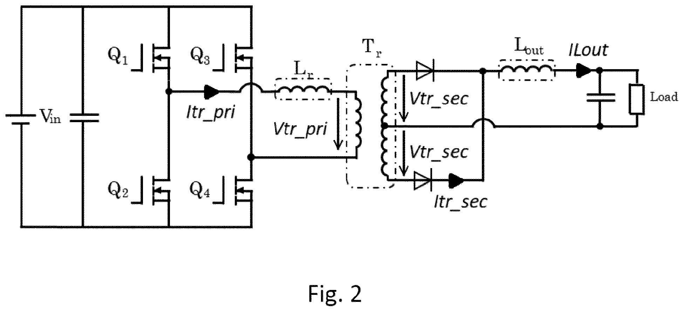

Fig. 2 illustrates the basic topology of a phase-shift full-bridge DC-DC converter. This topology comprises four controllable switches Q1-Q4 (e.g. MOSFET or IGBT) arranged in the classical full-bridge configuration for inverting the input DC voltage Vin to an intermediate AC voltage. The intermediate AC voltage has three possible voltage levels, +Vin, 0 and -Vin, and is fed to the series arrangement of the series inductor Lr and the primary winding of the transformer Tr. The secondary winding of the transformer is split in two halves and rectified alternately by two diodes which can be replaced with controllable switches (e.g. MOSFET or IGBT) for a so-called active rectification or synchronous rectification, thereby improving efficiency at the expense of complexity, as is well known in the art. The output inductor Lout together and the capacitor adjacent thereto filter the output supply towards the load. In Fig. 2, the usual symbols of a triangle and an arrow are respectively used for currents flowing through a conductor and voltages between two nodes. The triangular current symbol has one of its edges perpendicular to the conductor where the current is measured and a vertex, respectively called herein "perpendicular base" and "output vertex". The arrowed voltage symbol has one "naked end" and another "arrowed end".

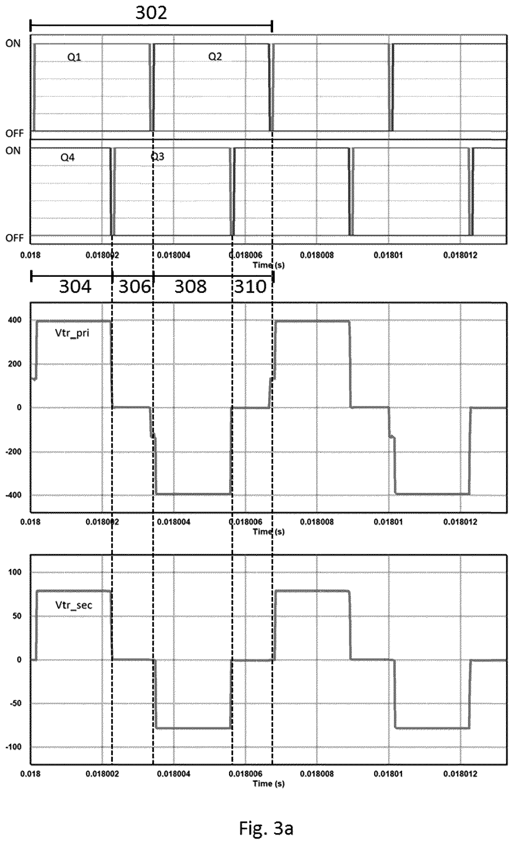

For this converter, Figs. 3a-3b show the most representative steady-state waveforms in a simulated ideal model (i.e. the converter working properly). The magnitudes shown in each of the plots can be identified through the corresponding label on Fig. 2, wherein a positive current value (for magnitudes starting with "I") corresponds to a direction of a current through the respective conductor from the perpendicular base of the triangular symbol to the output vertex and vice versa for negative current values, and wherein a positive voltage value (for magnitudes starting with "V") corresponds to a case where the voltage of the node with a naked end is higher than the voltage of the node with the arrowed end, and vice versa for negative voltage values. The working principle of the topology and its waveforms belong to the common knowledge of the person skilled in the art and their general description is therefore avoided.

CN210039873U discloses a transformer that includes a magnetic structure and a set of coils. The magnetic structure includes a top member, a bottom member, and a plurality of legs extending between the top member and the bottom member. The plurality of legs include two outer legs. The set of coils is wound about the two outer legs of the magnetic structure and electrically coupled in series.

EP3401935A1 discloses an integrated magnetic component for a power converter including converters configured for interleaved operation. The integrated magnetic component includes a first yoke and a second yoke and for each converter a winding carrying leg which comprises a primary winding and a secondary winding, wherein the primary winding and the secondary winding are wound on the respective winding carrying leg.

EP3349224A1 discloses an integrated magnetic component for a switched mode power converter. The integrated magnetic component comprises a single magnetic core structure formed by magnetic core elements, wherein at least one of the magnetic core elements is a leg-core-element with a flange and one or more legs are arranged on one side of the flange.

EP3133614A1 discloses an integrated magnetic component for a switched mode power converter, which includes a transformer with two transformer core elements and at least one choke core element. Each core element comprises two outer legs and a flange which connects the outer legs to form U-like core elements. Each choke core element abuts a flange of one of the transformer core elements.

### Problem to be solved

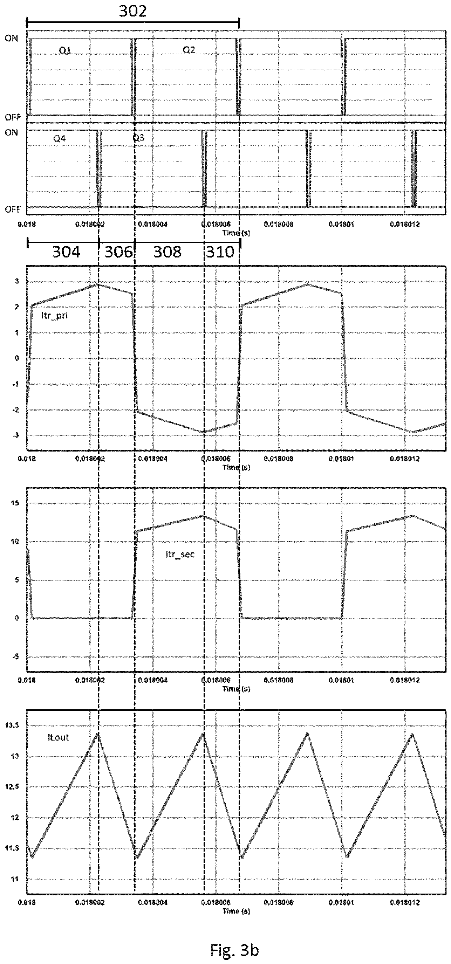

Nevertheless, it is worth highlighting some relevant aspects of the waveforms of Fig. 3. Each switching period 302 can be divided in four sub-stages 304, 306, 308 and 310. The current in the series inductor Lr and the current in the primary winding of the transformer Tr is, per definition, the same (Itr_pri), since they are disposed in series. Therefore, the integration of those two magnetic components can lead to cancellation of flux. On the other hand, the current across the output inductor Lout has a high DC current with an AC ripple superimposed. As a result, the flux density in the output inductor has a high DC bias. Additionally, the frequency of the current waveform across the output inductor Lout is doubled with respect to that of the other two magnetic components (transformer Tr and series inductor Lr). Therefore, since the integration of the three magnetic components implies that the output inductor must be adjacent in the core structure to one of the other two remaining magnetic components (transformer Tr and series inductor Lr), the fluxes in the perpendicular portion adjacent to the output inductor Lr are, at least for some of the sub-stages 304, 306, 308 and 310, added instead of cancelled, thereby resulting in an excessive magnetic field in the transformer core. As a result, saturation in one or some magnetic components of the structure can occur, leading to the system failure, unless the design takes into account the possible flux additions appropriately.

Fig. 4 shows a schematic example for the integration of the three magnetic components of the phase-shift full-bridge DC-DC converter in one core structure 100 without taking into account the teachings of the present invention. Around the central leg of the first windowed portion 102-1, the winding 302-1 of the series inductor Lr is arranged; as already explained, the central leg of the core has an air gap so that the inductance of the series inductor Lr can be adjusted with a good resolution according to the value decided in a previous design phase. Around the central leg of the second windowed portion 102-2, the primary winding 302-2-1 of the transformer Tr is arranged, together with the secondary windings 302-2-2 and 302-2-3 of the same transformer. No air gap is usually conceived for portions which receive the windings of transformers, with the exception of flyback transformers, since the value of their equivalent inductances (and, in particular, of their magnetizing inductance) is usually not critical. It is worth mentioning that, from a magnetic point of view, the primary winding 302-2-1 of the transformer Tr can be regarded as a magnetic flux generator, while the secondary windings 302-2-2 and 302-2-3 can be regarded as mere passive magnetic flux receivers and can be ignored for understanding what happens in the perpendicular portions 104-1 and 104-2 regarding the addition or cancellation of flux between the components located at the windowed portions 102-1 vs 102-2 and 102-2 vs 102-3, respectively. It goes without saying that the windings 302-1 and 302-3 of the series inductor Lr and the output inductor Lout, respectively, are to be regarded as well as magnetic flux generators. Around the central leg of the third windowed portion 102-3, the winding 302-3 of the output inductor Lout is arranged; as already explained, the central leg of the core has as well an air gap so that the inductance of the series inductor Lout can be adjusted with a good resolution according to the value decided in a previous design phase.

As shown in Fig. 2, the series inductor Lr and the primary winding of the transformer Tr must be connected in series; in this respect, Fig. 4 shows how that series connection is to be arranged, so that flux cancellation in the perpendicular portion 104-1 shared by the primary winding a current Itr_pri leads to flux cancellation: as wound in Fig. 4, a positive current Itr_pri, i.e. flowing downwards in the conductor around the central leg of the primary winding 302-2-1 of the second windowed portion 102-2, generates thereby -right hand rule- a flux which ascends through the central leg of the second windowed portion 102-2, flows within the second perpendicular portion 104-2 from its center to its periphery, flows downwards through the peripheral walls of the second windowed portion 102-2 and flows within the first perpendicular portion 104-1 from its periphery to its center; meanwhile, as wound in Fig. 4, that positive current Itr_pri flows also downwards in the conductor around the central leg of the winding 302-1 of the series inductor Lr, generating thereby -right hand rule- a flux which ascends through the central leg -and air gap-of the first windowed portion 102-1, flows within the first perpendicular portion 104-1 from its center to its periphery, flows downwards through the peripheral walls of the first windowed portion 102-1 and flows within the bottom portion 122 of the structure from its periphery to its center. Vice versa would it also happen if Itr_pri was negative, i.e. flowing upwards, where the direction of the fluxes would be the opposite as previously cited for the flow downwards. Therefore, in the perpendicular portion 104-1 interfacing the windowed portions 102-2 and 102-1 respectively for the transformer Tr and the series inductor Lr, the flux tends to cancel, since the flux generated by the primary winding 302-2-1 of the transformer and the flux generated by the winding 304-1 has always (i.e. irrespective of the direction of the current Itr_pri) opposite directions. This, in turn, leads to cancellation of flux: i.e. the absolute value of the resulting magnetic flux travelling through the perpendicular portion 104-1 is always smaller than that travelling through the bottom portion 122 of the core structure 100. This can be advantageously used for reducing the thickness of the first perpendicular portion 104-1.

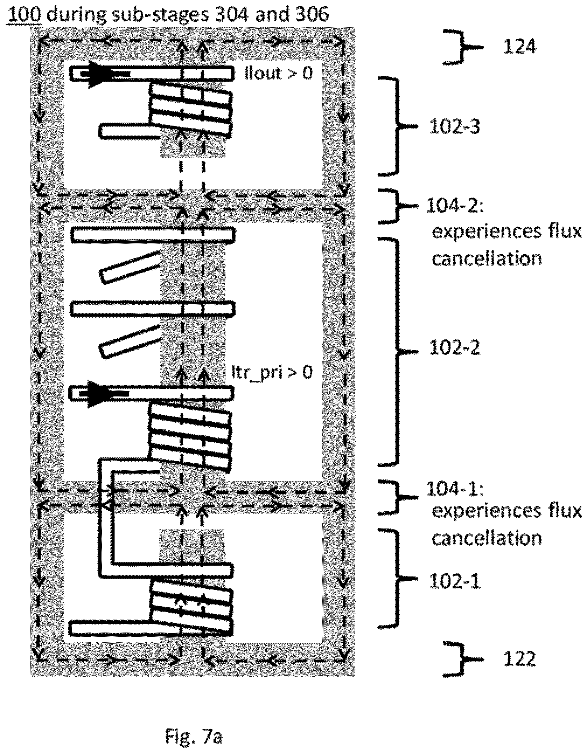

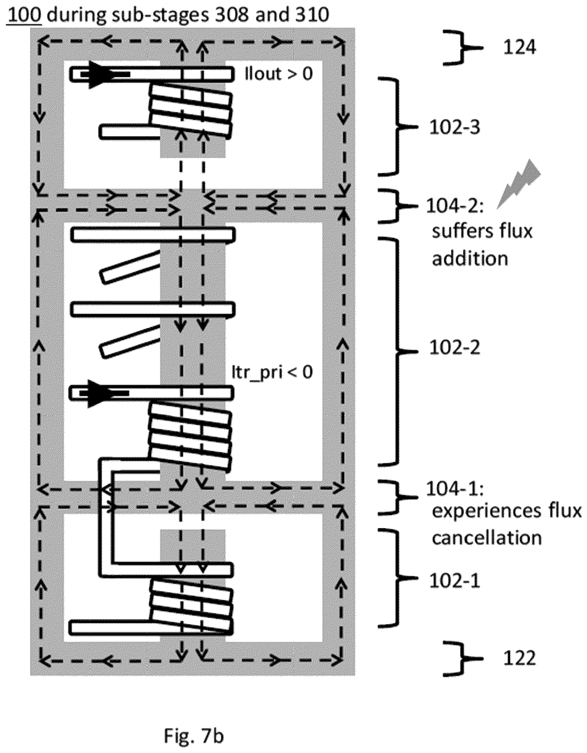

In contrast to the first perpendicular portion 104-1, what happens in the second perpendicular portion 104-2 is completely different, the reason being the current waveform ILout of the output inductor Lout. As can be observed in Fig. 3b, the output current ILout flowing across the output inductor Lout is always positive. This, in turn, leads to a magnetic flux generated thereby being always of the same polarity. This is what has been referred to previously as "high DC bias". The consequence is, that the alternating polarity flux generated by the primary winding 302-2-1 of the transformer Tr as wound in Fig. 4 will tend to cancel the flux generated by the winding 302-3 of the output inductor Lout only during half of the period 302. In particular, wound as in Fig. 4, the flux generated by the current flowing through the winding 302-3 of the output inductor Lout flows always upwards in the central leg -and the air gap- of the third windowed portion 102-3, within the top portion 124 it flows always from the center to the periphery, within the peripheral walls of the third windowed portion 102-3 it flows always downwards and, finally, within the second perpendicular portion 104-2 it flows always from the periphery to the center. Therefore, as wound in Fig. 4, only during the positive sub-stages 304 and 306 (i.e. sub-stages of positive current ltr_pri and positive voltage Vtr_pri) of the total switching period 302 the flux travelling through the second perpendicular portion 104-2 generated by the primary winding 304-2-1 of the transformer Tr and by the winding 304-3 of the output inductor Lout tends to cancellation. Meanwhile, as wound in Fig. 4, during the negative sub-stages 308 and 310 (i.e. sub-stages of negative current ltr_pri and negative voltage Vtr_pri) of the total switching period 302 the flux travelling through the second perpendicular portion 104-2 generated by the primary winding 304-2-1 of the transformer Tr and by the winding 304-3 of the output inductor Lout tends to addition. As for most components, the worst case in magnetic components must be also considered: saturation must be avoided at any time. Therefore, the tendency towards cancellation of flux during the positive sub-stages 304 and 306 is of little use. Figs. 7a-b described in the section dealing with the "Detailed description of the invention" better show the flux directions to understand what has been described in this paragraph and the paragraph immediately preceding.

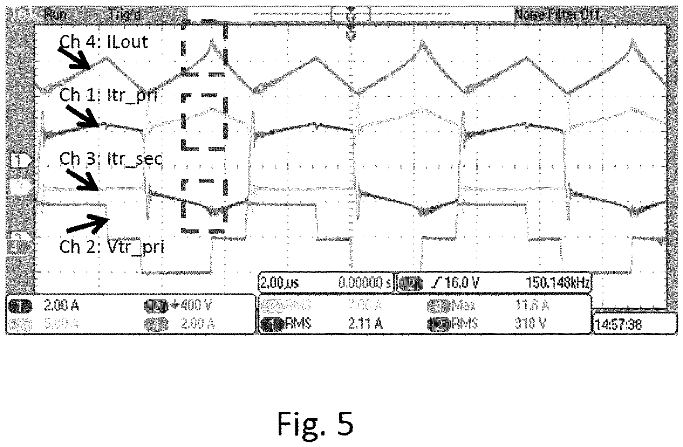

Should the previous considerations not be taken into account, could the resulting core structure 100 lead to saturation of at least one of the magnetic components sharing the perpendicular portion 102-2 where addition of flux can happen. Before arriving at the present invention, the inventors had found it difficult to establish a systematic design approach of integrated magnetic components which avoided saturation. Fig. 5 is an example thereof: it shows the saturation observed in the lab for a prototype built without using the teachings of the present invention. The current waveforms captured in channels 4, 3 and 1, respectively flowing through the output inductor Lout, one of the secondary windings of the transformer Tr and the primary winding of the transformer (and the series inductor Lr) show signs of saturation. Those signs are departure from the usual linear ramping up of the inductor current towards a faster increase which must be avoided, as is readily understandable by a skilled person. The core has lost in those areas, marked with dotted lines in Fig. 5, its usual magnetic properties, leading to a loss of inductance which allows variations of current which are undesirably faster than the expected behavior.

Some work has been done regarding integration of magnetic components in general and regarding the integration of the three magnetic components of the phase-shift full-bridge DC-DC converter in particular. Nevertheless, there is a lack of research for the integration of magnetic components whose windings generate flux which cannot be cancelled by the flux generated by the windings of other magnetic components in the integrated structure, as it is the case of the output inductor in the phase-shift full-bridge DC-DC converter.

### Summary of invention

The objective of this invention is to provide the general teaching (i.e. a systematic approach) for enabling the integration of a set of magnetic components including a magnetic component whose current waveform generates a flux which cannot be cancelled with the flux generated by the current waveforms of any other magnetic components to be integrated therewith. More specifically, the present invention enables the person skilled in art to integrate in the same core structure the output inductor together with the series inductor and the transformer for a phase-shift full-bridge DC-DC converter.

In a first aspect, the invention is defined by the power converter of claim 1. Other optional features are defined in the dependent claims.

The integrated core structure is suitable for integrating the magnetic components of a power converter, each of the magnetic components comprising at least one winding. The integrated core structure comprises a plurality of windowed portions and a plurality of perpendicular portions. Each of the windowed portions is arranged successively in a first direction, wherein a structure projection area is defined by the projection of the integrated core structure on a first plane. The first plane is a plane perpendicular to the first direction and not intersecting the integrated core structure. Additionally, the windowed portions are defined by a respective projection on the first plane if isolated from the integrated core structure which does not coincide with the structure projection area, so that at least one window is accommodated in each one of the plurality of windowed portions and is adapted to receive the at least one winding of one of the at least two magnetic components. Each of the perpendicular portions is arranged between two consecutive windowed portions and is immediately adjacent thereto, so that an alternate succession of windowed portions and perpendicular portions is arranged in the integrated core structure. Additionally, the perpendicular portions are defined by a respective thickness in the first direction for each of them and by a projection on the first plane common for all of them if isolated from the integrated core structure and coincident with the structure projection area. The thickness of each of the plurality of perpendicular portions is adjusted to the highest absolute peak value of the resulting magnetic flux that has to flow through the respective perpendicular portion as a consequence of the aggregation of each of the respective fluxes to be generated by the windings to be received in the respective windows to be accommodated in the each of the two windowed portions immediately adjacent to the respective perpendicular portion so that the maximum flux density of the material of the respective perpendicular portion is not exceeded.

A method for forming an integrated magnetic component arrangement, that does not form part of the present application, comprises the following steps:
- (S0a) optionally, conceiving the topology and the most representative value of each of its components for a converter, based on design specifications;
- (S0b) optionally, defining the real converter, which comprises, for each of the components, either picking a particular real component from a catalogue or designing an individual real component, wherein, for the case of magnetic components, an individual design must be made for each of them with compatible cores, such compatibility being determined by having substantially the same shape and size for all portions of the cores meant to act as top or bottom portions in case they were stacked in a first direction;
- optionally, repeating the conceiving and defining steps in an iterative process until the design specifications are met;
- sorting the magnetic components of the topology in groups, wherein the condition to belong to a common group for two or more magnetic components is that those magnetic components would not lead to flux addition in the perpendicular portions formed by the respective top and bottom portions if they were stacked together;
- first ordering for the magnetic components within each of the groups which are not populated by a single magnetic component according to the highest absolute peak flux value;
- second ordering for the groups with respect to each other according to the highest and lowest absolute peak flux values of the magnetic component(s) within the groups, thereby finalizing the ordering of the magnetic components within an integrated core structure;
- determining the winding direction of the windings of all the magnetic components so that cancellation of flux can be maximized and addition of flux in the perpendicular portions can be minimized; and
- redefining the thickness of each of the perpendicular portions according to the highest absolute peak flux value to flow through the respective perpendicular portion and the maximum flux density value of the material of the respective perpendicular portion, so that the thickness of the perpendicular portion is enough to comply with that maximum flux density value without unnecessary oversizing.

### Brief description of drawings

Fig. 1a shows the structure for several integrated magnetic components with a one-piece core.
Fig. 1b shows the structure for several integrated magnetic components with a stack of cores.
Fig. 2 shows the topology of a phase-shift full-bridge DC-DC converter.
Figs. 3a and b show the ideal steady-state waveforms of a phase-shift full-bridge DC-DC converter.
Fig. 4 shows the structure of Fig. 1b receiving the windings for the integration of the magnetic components of the phase-shift full-bridge DC-DC converter of Fig. 3.
Fig. 5 shows the lab oscilloscope waveforms for magnitudes of several magnetic components integrated without using the teachings of the present invention.
Fig. 6 shows a systematic approach for the integration of magnetic components in a common core structure according to the present invention.
Figs. 7a and b show the flux directions for the arrangement shown in Fig. 4 as part of the analysis to be done in the approach of Fig. 6.
Fig. 8 conceptually illustrates the modifications in the perpendicular portions that must be made for avoiding saturation and that can be made for optimizing size, weight and cost.

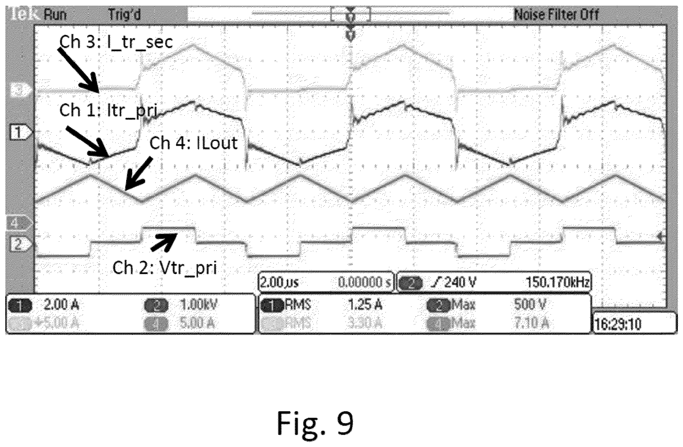

Fig. 9 shows the waveforms of a real prototype of a phase-shift full-bridge with integrated magnetic components whose core structure has an enlarged perpendicular portion and does not suffer from saturation in any of the integrated magnetic components.

### Description of embodiments

The present invention provides the reader with a systematic approach to the design of a core structure suitable for integrated magnetic components in a power converter.

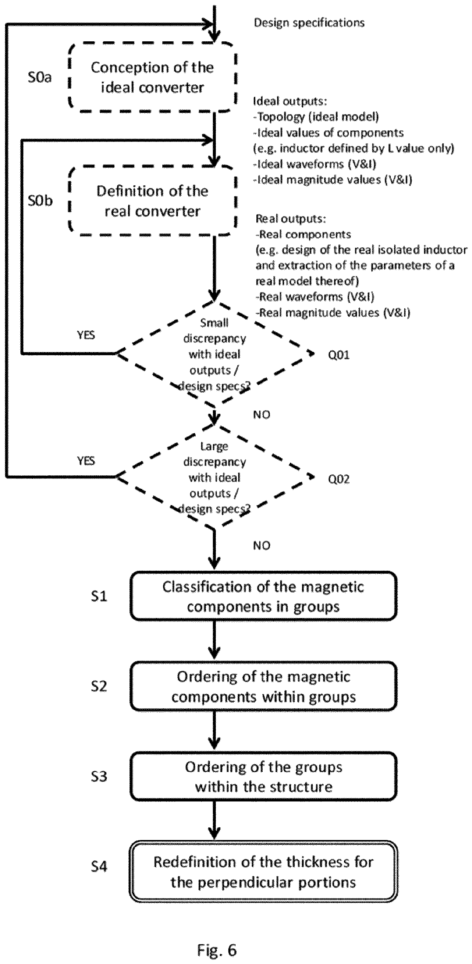

The approach can follow the scheme depicted in Fig. 6. A first previous step S0a, having actually nothing to do with the design of magnetic components in general, deals with the conception of the ideal converter, wherein a first set of outputs comprising ideal outputs is defined based on design specifications. This step is very much dependent on the skills of the design engineer, otherwise the possible range of topologies and parameters is too large. A non-exhaustive list of design specifications can comprise target output voltage (or voltage range) of the converter, input voltage (or voltage range), desired output voltage ripple, desired inductor current ripple, transient response against load changes, transient response against changes at the input, maximum size or weight of the converter and electromagnetic compatibility requirements (like EMC emissions). A non-exhaustive list of ideal outputs obtained based on those design specifications can comprise the topology to be used and ideal values of the components: nominal inductance of inductors, nominal capacitance of capacitors, transformation ratio for transformers, together with ideal waveforms of currents and voltages along with their RMS and peak values. This step is well known to the person skilled in the art of converter design.

A second previous step, S0b, having to do with magnetic components in general but having only slightly to do with the design of integrated magnetic components in particular, deals with the definition of the real converter, wherein a second set of outputs comprising real outputs is defined based on the first set of outputs comprising ideal outputs. For the defining the real converter as referred to herein, the ideal values obtained in the first previous step get in this second previous step translated into real components, either picked from the shelf (e.g. selection of capacitors and controllable switches) or designed, like magnetic components, which are in this step to be designed as if they were to be built with individual non-integrated core structures. With respect to the integrated magnetic design, possibly the only aspect to be taken into account is that the core sizes and shapes used for each of the individually designed magnetic components of this step must be physically compatible. In this context, physically compatible means that the top and bottom portions of the core considered for each of the individual magnetic components have the same projection on a plane parallel to the top (and bottom) portion which is external to the core considered; other parameters like height, size and shape of the peripheral walls and the central leg (if any) can vary among the different real magnetic components as designed. The performance of the converter with the real picked or designed components is checked, for example through simulation, computer-aided calculations (with a spreadsheet) or, if simple enough, by hand-made calculations with paper and pen. Real waveforms and values like ripples, peaks or averages are thereby obtained and, together with physical characteristics of the real components, can then be compared vis-a-vis the ideal waveforms and values and vis-a-vis the design specifications (like target voltages, currents, sizes...). In case of discrepancies, the real components can be subject to an alternative choice out of the shelf or to redesign, thereby repeating S0b again, wherein input to the subsequent execution of step S0b might be the real waveforms and values calculated in the previous execution of step S0b, instead of the ideal ones output by step S0a. In case of large discrepancies, even the ideal components can suffer modifications, thereby repeating S0a and, subsequently, S0b again. Thereby, an iterative process can be established.

The steps S0a, S0b and the two decision boxes Q01 and Q02 can be regarded as normal design steps for the engineer skilled in the field of converter design. With respect to the integration of magnetic components, which starts as from step S1, the input for the integration approach is the individual real magnetic components either (i) as designed in the last execution of step S0b (meant to be compliant with the design specifications), (ii) as a result of an alternative design method or (iii) simply given as input design parameters. In either case, the current approach is the same. The first step S1 comprises a classification of the magnetic components in groups. A plurality of magnetic components are sorted in a common group if their current waveforms can lead to an integration exhibiting a non-additive resulting flux. The resulting flux is to appear in the perpendicular portions of the future integrated core structure. In order to determine if a plurality of k current waveforms leads to the possibility of exhibiting non-additive resulting flux in the respective k-1 perpendicular portions interfacing them, the following can be done:
(1) Over the ideal current waveforms (preferred) or over the real current waveforms of the flux-generating windings (i.e. inductors or primary windings of transformers), the function "sign" is applied. The function "sign" as defined herein is a function applied to a current waveform over time which outputs a value 0 for the instants where the current is substantially zero, and if not, it outputs a value 1 if the current is positive or a value -1 if the current is negative.
(2) If for every instant throughout the whole switching period of the converter, the multiplication of the output values of the "sign" function for at least two waveforms is always either 0 or 1 or, alternatively always 0 or -1, those at least two waveforms can lead to non-additive resulting flux and must be grouped together. Conversely, if the multiplication of the output of the "sign" function applied over those two waveforms shows at least for a first instant the product value 1 and at least for a second instant different from the first instant the product value -1, those two waveforms cannot be grouped together and must be sorted in different groups.
(3) Each magnetic component whose current waveform cannot be grouped with another one according to steps (1) and (2) forms a group separate from the other group(s).

Now that the groups are formed, S2 deals with the ordering of the magnetic components in the integrated structure. All the magnetic components being in a common group will be built using successive windowed portions as defined in the "Background Art" section of the present invention. For each of the windings regarded as magnetic flux generators in a group with several magnetic components, the components are ordered by flux absolute peak in, for instance, the portion of the core around which the flux-generating winding is to be wound. The term absolute peak of a waveform is the maximum absolute value that the magnitude of that waveform reaches; in other words, the maximum value of all the values exhibited by the waveform across the switching period after having applied the absolute value function. The order in that group will be given by the magnetic component with the overall highest absolute peak flux value throughout the whole switching period placed at the bottom position, the one with the second highest absolute peak flux value placed on top of the one with the highest absolute peak flux value... until the one with the lowest absolute peak flux value is placed on top of all the others. The winding direction must be defined so that cancellation of flux can take place, e.g. through the use of the right-hand rule, perfectly known by the skilled person. This way, the maximum cancellation of flux can be obtained in the sequence of magnetic components. How to calculate flux values can be easily done with the well-known analogy between magnetic circuits and electric circuits.

For each of the pairs of immediately successive integrated magnetic components in a group with non-additive resulting flux, the thickness of the perpendicular portion interfacing them does not necessarily always need to be the aggregation of the bottom and top portions of the individually designed magnetic components meant to form that perpendicular portion. Worst case, it just has to be the thickness of the one where the top (or bottom portion) is subject to the highest absolute peak flux value. The current waveform across the flux-generating winding of an individually designed magnetic component has the same shape as the flux through any portion of its core; therefore, to identify the instants where the flux reaches its highest and lowest peak values, the highest and lowest absolute peak values or substantially zero value, it is enough to refer, respectively, to the instants where the current waveform of the magnetic component reaches its highest and lowest peak values, the highest and lowest absolute peak values or substantially zero value. In case at the instant of highest absolute peak value in the current waveform of the magnetic components having the highest absolute peak flux, the current waveform of the other magnetic component in the pair is not substantially zero, the thickness of the perpendicular portion interfacing them can be made smaller than that of the top (or bottom) portion of the magnetic component having the highest absolute peak flux value as individually designed. Therefore, although it appears to be intuitive that the thickness of the perpendicular potion must be the thickness of one of the top or bottom portions of the components as originally designed to be at both sides of that respective perpendicular portion, the reality shows that, thanks to the cancellation of flux, the thickness can be reduced. This reduction will belong to step S4 described later.

Following the description of step S2, the components of each group are considered ordered. For those groups having only one magnetic component, the ordering within the group is neither necessary nor meaningful, as it results evident. Now, the groups must be ordered with respect to each other in step S3. The overall bottom of the structure can be reserved for the magnetic component having the overall highest absolute peak of magnetic flux, as individually designed in step S0b. If that component is within a group with more than one magnetic component, the rest of the elements as ordered in step S2 will follow from bottom to top. The overall top of the structure can be reserved for the magnetic component having the overall second highest absolute peak value of magnetic flux, as individually designed in step S0b. If that component is within a group with more than one magnetic component, the rest of the elements as ordered in step S2 will follow from top to bottom (and therefore the sub-structure formed by that group is to be rotated 180 degrees with respect to the description made in step S2). For most converters, the instructions up to now already define the order of the whole structure. If not, i.e. in cases with at least three different groups after the execution of S1, the order and possible rotation of the groups to be disposed between the two groups already placed is to be determined. For this purpose, all the possible finite combinations can be considered and the most reasonable order of the remaining groups can be found out easily in terms of minimizing the flux additions in the perpendicular portions interfacing two different groups. This can be made relatively easily with a spreadsheet, but care must taken in that this calculation has to be made according to the flux waveform, since current waveforms can only replace them for qualitative assessments.

For interfacing the terminal components of a group and a successive one adjacent thereto, the opposite happens with respect to the case of interfacing two magnetic components within a group: due to the undesirable and unavoidable events of addition of flux that will occur, it is not enough that the thickness of the perpendicular portion interfacing those two terminal components corresponds to the thickness of one of the top or bottom portions of those components as originally designed, as the intuition of the designer could suggest. This enlargement will belong to step S4 described later.

As a conclusion, the addition or cancellation of fluxes must be considered. The individual components as individually designed are usually conceived as an optimal solution regarding size, weight, price and performance. In the subsequent stage of integration, if a conservative approach were systematically followed, wherein the thickness of every perpendicular portion interfacing two components were equivalent to that of the aggregation of the top and bottom portions of the respective magnetic components as individually designed, the integrated components would be larger, heavier and more expensive than needed. Should the opposite approach be taken, wherein the thickness of every perpendicular portion interfacing two components were equivalent to that of the top or bottom portions of the components as individually designed, the integrated components could suffer from saturation, even if the larger value of the two thicknesses were selected, thereby resulting in poor performance or even in damage to the magnetic components, other components, the whole converter, the power supply or the load.

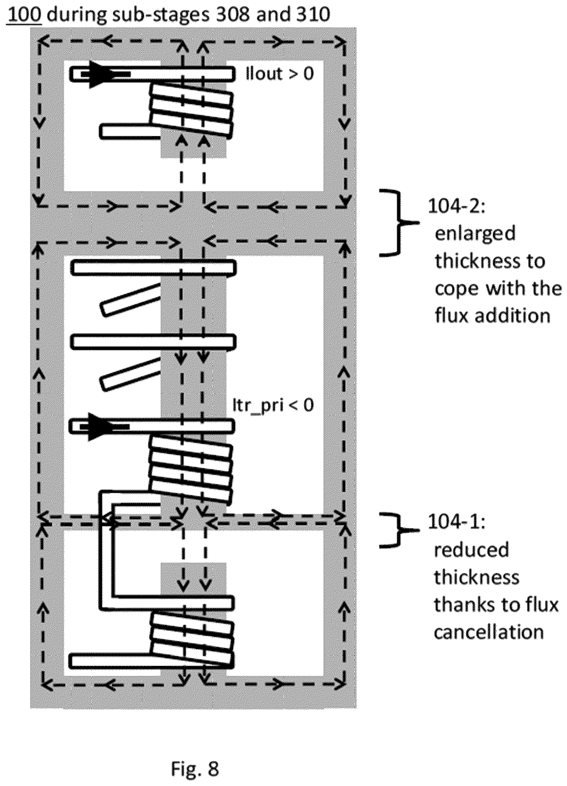

This is why the approach shown in Fig. 6 refers to a last step S4, dealing with the redefinition of the thickness in the perpendicular portions. In step S4, the engineer must consider the maximum absolute value for the whole switching period of the resulting flux addition of the perpendicular portions meant to interface two different groups and the maximum absolute value for the whole switching period of the resulting flux cancellation of the perpendicular portions meant to interface two magnetic components within a group. In this step, the quantitative calculation must be made again according to the flux waveform, since current waveforms can only replace them for qualitative assessments. Once the maximum absolute values for the resulting flux additions and calculations have been calculated, the area needed at each of the perpendicular portions can be easily calculated by dividing each maximum absolute value for the resulting flux by the maximum flux density of the material of the selected core, e.g. to be defined in step S0b. The thickness needed at each of the perpendicular portions will be given by the depth of the top (or compatible bottom, which must be the same) portions as individually designed, wherein the depth is the size of the core in a direction perpendicular to the paper in Figs. 7a-b and 8 and in the upper view of Figs. 1a-b.

Although the description of steps S1-S3 could appear complex, this is only because a systematic approach has been provided which could be applicable to a converter with a large number of magnetic components to be integrated. The reality is usually simpler and the converters usually have a maximum of three magnetic components, as is the case for the phase-shift full-bridge converter. The reader will appreciate from the current waveforms ILout and Itr_pri (which corresponds to that of the series inductor Lr too) that the classification of the magnetic components in groups according to step S1 is trivial for that converter, with a first group formed by the series inductor Lr and the transformer Tr and another one formed by the output inductor Lout alone after applying the sorting proposed based on the function "sign". Assuming that the current through the winding of the output inductor Lout leads to highest absolute peak flux value in the top/bottom portion of the magnetic component as individually designed, the order within the group formed by the series inductor Lr and the transformer Tr is obvious too, with the series inductor Lr being placed at the overall bottom and, therefore, the transformer Tr having to interface the output inductor Lout. The reader will understand that in steps S2 and S3 the structure has been ordered with several references to bottom and top of the overall core structure as an example only, and that the resulting integrated magnetic component would be the same if each of the references were respectively made the other way around, i.e. to top and bottom of the overall core structure instead.

Figs. 7a-7b show the flux additions and cancellations throughout the four sub-stages 304, 306, 308 and 310 of the whole switching period 302 as defined by Figs. 3a-3b for the phase-shift full-bridge DC-DC converter of Fig. 2. It can be seen that, during the negative cycle formed by the third sub-stage 308 and the fourth sub-stage 310, addition of flux occurs and the undesirable effects described above can happen, unless the thickness of the perpendicular portion 104-2 is adapted to these considerations. Additionally, it can be seen that, during the positive cycle formed by the first sub-stage 304 and the second sub-stage 306, cancellation of flux occurs and the positive effect associated thereto can be translated into a reduction of thickness for the perpendicular portion 104-2.

The core of the invention is as simple as effective. Having the above teaching in mind, the designer of the integrated magnetic components must adapt the thickness of the perpendicular portions to the maximum flux values expected from the current waveform and the intended winding arrangement to thereby limit the aggregated flux density resulting from the two adjacent components below the limits of the core material. This means, for those perpendicular portions interfacing components which lead to addition of flux (i.e. in different groups according to step S1 if the approach of Fig. 6 is followed), providing a thickness larger than any of the top and bottom portions of the components as originally designed; and, for those perpendicular portions interfacing components which lead to cancellation of flux (i.e. within a same group according to step S1 if the approach of Fig. 6 is followed), providing a thickness smaller than the thickest one of the top and bottom portions of the components as originally designed.

To show it in an exemplary way, Fig. 8 is provided. In Fig. 8, the perpendicular portion 104-2 is made greater. That way, the perpendicular portion interfacing the windowed portions 102-2 and 102-3 for respectively receiving the windings of transformer Tr and the output inductor Lout can accommodate in a safe manner the resulting undesirable and unavoidable flux addition. Additionally, the thickness of the perpendicular portion 104-1 can be reduced due to the positive flux cancellation effect resulting from the successive disposition in the core structure 100 of the windings of the series inductor Lr and the transformer Tr, respectively in the windowed portions 102-1 and 102-2.

## Claims

1. A power converter, being a phase-shift full-bridge DC-DC converter, comprising:
- magnetic components (Lr, Tr, Lout), wherein, a first magnetic component (Lr) comprises a series inductor (Lr), a second magnetic component (Tr) comprises a transformer (Tr), and a third magnetic component (Lout) comprises an output inductor (Lout);
- an integrated core structure (100) that integrates the magnetic components (Lr, Tr, Lout), whereby the series inductor (Lr) comprises a winding (302-1), transformer (Tr) comprises a primary winding (302-2-1) and secondary windings (302-2-3), and the output inductor (Lout) a winding (302-3);
the integrated core structure (100) comprising:
(i) a plurality of windowed portions (102-1, 102-2, 102-3), each of them being:
- stacked successively in a first stacking direction (A/A), said first stacking direction (A/A) being along a height of the core structure (100), wherein a structure projection area (112) is defined by the projection of the integrated core structure (100) on a first plane (110), said first plane (110) being perpendicular to the first stacking direction (A/A) and not intersecting the integrated core structure (100), and
- defined by a respective projection area (118) of the windowed portions (102-1, 102-2, 102-3) on the first plane (110) taken on a different height of the core structure than the height of that the structure projection area (112) is taken, resulting in a window projection area which does not coincide with the structure projection area (112), since it the window projection area (118) is empty in some zones due to the presence of windows provided by the windowed sections, so that at least one window is accommodated in each one of the plurality of windowed portions (102-1, 102-2, 102-3) to receive the at least one winding (302-1, 302-2-1, 302-2-2, 302-2-3, 302-3); and
(ii) a plurality of perpendicular core portions (104-1, 104-2), each of them being
- arranged between two consecutive windowed portions (102-1, 102-2, 102-3) and immediately adjacent thereto, so that an alternate succession of windowed portions (102-1, 102-2, 102-3) and perpendicular core portions (104-1, 104-2) is arranged in the integrated core structure (100), and
- defined by a respective thickness (116-1, 116-2) in the first stacked direction (A/A) and by a projection area (114) on the first plane (110) coincident with the structure projection area (112);
wherein:
a thickness (116-1, 116-2) along the height of each of the plurality of perpendicular portions (104-1, 104-2) is such that, during use of the converter, the highest absolute peak value of the resulting magnetic flux flowing through the respective perpendicular portion (104-1, 104-2) as a consequence of the aggregation of each of the respective fluxes generated by the windings (302-1, 302-2-1, 302-2-2, 302-2-3, 302-3) received in the respective windows accommodated in the each of the two windowed portions (102-1, 102-2, 102-3) immediately adjacent to the respective perpendicular portion (104-1, 104-2), does not exceed the maximum flux density of the material of the respective perpendicular portion (104-1, 104-2), and whereby the plurality of windowed portions comprises three windowed portions (102-1, 102-2, 102-3) and two perpendicular portions (104-1, 104-2), wherein:
- the window of the first windowed portion (102-1) receives the winding (302-1) of the series inductor (Lr) of the phase-shift full-bridge DC-DC converter;
- the window of the second windowed portion (102-2), arranged between the first windowed portion (102-2) and the third windowed portion (102-3) accommodates the primary and secondary windings (302-2-1, 302-2-2, 302-2-3) of the transformer of the phase-shift full-bridge DC-DC converter;
- the window of the third windowed portion (102-3) receives the winding (302-3) of the output inductor (Lout) of the phase-shift full-bridge DC-DC converter.

2. The power converter of claim 1, wherein each of the windowed portions (102-1, 102-2, 102-3) comprises peripheral walls and, preferably, wherein at least one of the windowed portions (102-1, 102-2, 102-3) comprises a central leg, and, further preferably, wherein at least one central leg comprises an air gap (120-1, 120-3).

3. The power converter of any of the previous claims, wherein the primary winding (302-2-1) of the transformer (Tr) and the winding (302-1) of the series inductor (Lr) are wound in the same direction, so that the resulting flux in the first perpendicular portion (104-1) experiences flux cancellation during operation of the phase-shift full-bridge DC-DC converter.

4. The power converter of any of the previous claims, wherein the thickness of the first perpendicular portion (104-1) is smaller than the thickness of the second perpendicular portion (104-2).

## Patentansprüche

1. Stromwandler, bei dem es sich um einen Phasenverschiebungsvollbrücken-DC-DC-Wandler handelt, der Folgendes umfasst:
- magnetische Komponenten (Lr, Tr, Lout), wobei eine erste magnetische Komponente (Lr) einen Serieninduktor (Lr), umfasst, eine zweite magnetische Komponente (Tr) einen Transformator (Tr) umfasst und eine dritte magnetische Komponente (Lout) einen Ausgangsinduktor (Lout) umfasst;
- eine integrierte Kernstruktur (100) die die magnetischen Komponenten (Lr, Tr, Lout) integriert, wodurch der Serieninduktor (Lr) eine Wicklung (302-1) umfasst, der Transformator (Tr) eine Primärwicklung (302-2-1) und Sekundärwicklungen (302-2-3) umfasst und der Ausgangsinduktor (Lout) eine Wicklung (302-3) umfasst;
wobei die integrierte Kernstruktur (100) Folgendes umfasst:
(i) eine Vielzahl von Fensterabschnitten (102-1, 102-2, 102-3), von denen jeder Folgendes ist:
- sukzessive in eine erste Stapelrichtung (A/A) gestapelt, wobei die erste Stapelrichtung (A/A) entlang einer Höhe der Kernstruktur (100) verläuft, wobei ein Strukturvorsprungsbereich (112) durch den Vorsprung der integrierten Kernstruktur (100) auf einer ersten Ebene (110) definiert ist, wobei die erste Ebene (110) senkrecht zur ersten Stapelrichtung (A/A) verläuft und die integrierte Kernstruktur (100) nicht überschneidet, und
- durch einen jeweiligen Vorsprungsbereich (118) der Fensterabschnitte (102-1, 102-2, 102-3) auf der ersten Ebene (110) definiert, die sich auf einer anderen Höhe der Kernstruktur befindet als die Höhe, auf der sich der Strukturvorsprungsbereich (112) befindet, was zu einem Fenstervorsprungsbereich führt, der sich nicht mit dem Strukturvorsprungsbereich (112) deckt, da der Fenstervorsprungsbereich (118) aufgrund des Vorhandenseins von Fenstern, die von den Fensterregionen bereitgestellt werden, in einigen Zonen leer ist, derart, dass mindestens ein Fenster in jedem der Vielzahl von Fensterabschnitten (102-1, 102-2, 102-3) beinhaltet ist, um die mindestens eine Wicklung (302-1, 302-2-1, 302-2-2, 302-2-3, 302-3) aufzunehmen; und
(ii) eine Vielzahl von senkrechten Kernabschnitten (104-1, 104-2), von denen jeder Folgendes ist:
- zwischen zwei aufeinanderfolgenden Fensterabschnitten (102-1, 102-2, 102-3) angeordnet und denselben direkt benachbart, derart, dass eine abwechselnde Folge von Fensterabschnitten (102-1, 102-2, 102-3) und senkrechten Kernabschnitten (104-1, 104-2) in der integrierten Kernstruktur (100) angeordnet ist, und
- durch eine jeweilige Dicke (116-1, 116-2) in der ersten Stapelrichtung (A/A) und durch einen Vorsprungsbereich (114) auf der ersten Ebene (110), der sich mit dem Strukturvorsprungsbereich (112) deckt, definiert;
wobei:
eine Dicke (116-1, 116-2) entlang der Höhe von jedem der Vielzahl von senkrechten Abschnitten(104-1, 104-2) derart ist, dass während der Verwendung des Wandlers der höchste absolute Spitzenwert des resultierenden Magnetflusses, der als eine Konsequenz der Aggregation von jedem der jeweiligen Flüsse, die von den Wicklungen (302-1, 302-2-1, 302-2-2, 302-2-3, 302-3) erzeugt werden, die in den jeweiligen Fenstern aufgenommen sind, die in jedem der zwei Fensterabschnitte (102-1, 102-2, 102-3) beinhaltet sind, die dem jeweiligen senkrechten Abschnitt (104-1, 104-2) direkt benachbart sind, durch den jeweiligen senkrechten Abschnitt (104-1, 104-2) fließt, die maximale Flussdichte des Materials des jeweiligen senkrechten Abschnitts (104-1, 104-2) nicht überschreitet, und wodurch die Vielzahl der Fensterabschnitte drei Fensterabschnitte (102-1, 102-2, 102-3) und zwei senkrechte Abschnitte (104-1, 104-2) umfasst, wobei:
- das Fenster des ersten Fensterabschnitts (102-1) die Wicklung (302-1) des Serieninduktors (Lr) des Phasenverschiebungsvollbrücken-DC-DC-Wandlers aufnimmt;
- das Fenster des zweiten Fensterabschnitts (102-2), der zwischen dem ersten Fensterabschnitt (102-2) und dem dritten Fensterabschnitt (102-3) angeordnet ist, die Primär- und die Sekundärwicklungen (302-2-1, 302-2-2, 302-2-3) des Transformators des Phasenverschiebungsvollbrücken-DC-DC-Wandlers beinhaltet;
- das Fenster des dritten Fensterabschnitts (102-3) die Wicklung (302-3) des Ausgangsinduktors (Lout) des Phasenverschiebungsvollbrücken-DC-DC-Wandlers aufnimmt.

2. Stromwandler nach Anspruch 1, wobei jeder der Fensterabschnitte (102-1, 102-2, 102-3) Umfangswände umfasst und, vorzugsweise, wobei mindestens einer der Fensterabschnitte (102-1, 102-2, 102-3) ein zentrales Bein umfasst, und, ferner vorzugsweise, wobei das mindestens eine zentrale Bein einen Luftspalt (120-1, 120-3) umfasst.

3. Stromwandler nach einem der vorhergehenden Ansprüche, wobei die Primärwicklung (302-2-1) des Transformators (Tr) und die Wicklung (302-1) des Serieninduktors (Lr) in dieselbe Richtung gewickelt sind, derart, dass der resultierende Fluss im ersten senkrechten Abschnitt (104-1) während des Betriebs des Phasenverschiebungsvollbrücken-DC-DC-Wandlers eine Flussunterdrückung erfährt.

4. Stromwandler nach einem der vorhergehenden Ansprüche, wobei die Dicke des ersten senkrechten Abschnitts (104-1) kleiner ist als die Dicke des zweiten senkrechten Abschnitts (104-2).

## Revendications

1. Convertisseur de puissance, étant un convertisseur CC-CC en pont complet à déphasage, comprenant :
- des composants magnétiques (Lr, Tr, Lout), dans lequel, un premier composant magnétique (Lr) comprend une inductance série (Lr), un deuxième composant magnétique (Tr) comprend un transformateur (Tr), et un troisième composant magnétique (Lout) comprend une inductance de sortie (Lout) ;
- une structure de noyau intégrée (100) qui intègre les composants magnétiques (Lr, Tr, Lout), dans lequel l'inductance série (Lr) comprend un enroulement (302-1), le transformateur (Tr) comprend un enroulement primaire (302-2-1) et des enroulements secondaires (302-2-3), et l'inductance de sortie (Lout) un enroulement (302-3) ;
la structure de noyau intégrée (100) comprenant :
(i) une pluralité de parties à fenêtre (102-1, 102-2, 102-3), chacun d'elles étant :
- empilée successivement dans une première direction d'empilement (A/A), ladite première direction d'empilement (A/A) étant le long d'une hauteur de la structure de noyau (100), dans lequel une zone de projection de structure (112) est définie par la projection de la structure de noyau intégrée (100) sur un premier plan (110), ledit premier plan (110) étant perpendiculaire à la première direction d'empilement (A/A) et ne coupant pas la structure de noyau intégrée (100), et
- définie par une zone de projection respective (118) des parties à fenêtre (102-1, 102-2, 102-3) sur le premier plan (110) prise sur une hauteur de la structure de noyau différente de la hauteur de celle selon laquelle la zone de projection de structure (112) est prise, résultant en une zone de projection de fenêtre qui ne coïncide pas avec la zone de projection de structure (112), étant donné que la zone de projection de fenêtre (118) est vide dans certaines zones en raison de la présence de fenêtres fournies par les sections à fenêtre, de sorte qu'au moins une fenêtre est logée dans chacune de la pluralité de parties à fenêtre (102-1, 102-2, 102-3) pour recevoir le au moins un enroulement (302-1, 302-2-1, 302-2-2, 302-2-3, 302-3) ; et
(ii) une pluralité de parties de noyau perpendiculaires (104-1, 104-2), chacun d'elles étant :
- agencée entre deux parties à fenêtre (102-1, 102-2, 102-3) consécutives et immédiatement adjacente à celles-ci, de sorte qu'une succession alternée de parties à fenêtre (102-1, 102-2, 102-3) et de parties de noyau perpendiculaires (104-1, 104-2) est agencée dans la structure de noyau intégrée (100), et
- définie par une épaisseur respective (116-1, 116-2) dans la première direction d'empilement (A/A) et par une zone de projection (114) sur le premier plan (110) coïncidant avec la zone de projection de structure (112) ;
dans lequel :
une épaisseur (116-1, 116-2) le long de la hauteur de chacune de la pluralité de parties perpendiculaires (104-1, 104-2) est telle que, pendant l'utilisation du convertisseur, la valeur de crête absolue la plus élevée du flux magnétique résultant traversant la partie perpendiculaire respective (104-1, 104-2) en conséquence de l'agrégation de chacun des flux respectifs générés par les enroulements (302-1, 302-2-1, 302-2-2, 302-2-3, 302-3) reçus dans les fenêtres respectives logées dans chacune des deux parties à fenêtre (102-1, 102-2, 102-3) immédiatement adjacentes à la portion perpendiculaire (104-1, 104-2) respective, ne dépasse pas la densité de flux maximale du matériau de la partie perpendiculaire (104-1, 104-2) respective, et moyennant quoi la pluralité de parties à fenêtre comprend trois parties à fenêtre (102-1, 102-2, 102-3) et deux parties perpendiculaires (104-1, 104-2), dans lequel :
- la fenêtre de la première partie à fenêtre (102-1) reçoit l'enroulement (302-1) de l'inductance série (Lr) du convertisseur CC-CC en pont complet à déphasage ;
- la fenêtre de la deuxième partie à fenêtre (102-2), agencée entre la première partie à fenêtre (102-2) et la troisième partie à fenêtre (102-3) loge les enroulements primaire et secondaires (302-2-1, 302-2-2, 302-2-3) du transformateur du convertisseur CC-CC en pont complet à déphasage ;
- la fenêtre de la troisième partie à fenêtre (102-3) reçoit l'enroulement (302-3) de l'inductance de sortie (Lout) du convertisseur CC-CC en pont complet à déphasage.

2. Convertisseur de puissance selon la revendication 1, dans lequel chacune des parties à fenêtre (102-1, 102-2, 102-3) comprend des parois périphériques et, de préférence, dans lequel au moins l'une des parties à fenêtre (102-1, 102-2, 102-3) comprend une jambe centrale, et, de préférence encore, dans lequel au moins une jambe centrale comprend un entrefer (120-1, 120-3).

3. Convertisseur de puissance selon l'une quelconque des revendications précédentes, dans lequel l'enroulement primaire (302-2-1) du transformateur (Tr) et l'enroulement (302-1) de l'inductance série (Lr) sont enroulés dans le même sens, de sorte que le flux résultant dans la première partie perpendiculaire (104-1) subit une annulation de flux pendant le fonctionnement du convertisseur CC-CC en pont complet à déphasage.

4. Convertisseur de puissance selon l'une quelconque des revendications précédentes, dans lequel l'épaisseur de la première partie perpendiculaire (104-1) est inférieure à l'épaisseur de la seconde partie perpendiculaire (104-2).
